# EUROPEAN PATENT APPLICATION

(11) **EP 3 267 641 A1**
(43) Date of publication of application: **10.01.2018**
(21) Application number: 16758461.4
(22) Date of filing: 29.02.2016
(51) Int. Cl.: H04L 12/937

(54) **METHOD AND DEVICE REALIZING UPLOAD OF PROTOCOL PACKET TO CPU**

(30) Priority: 03.03.2015 CN 201510094446
(71) Applicant: ZTE Corporation, Shenzhen, Guangdong 518057 (CN)
(72) Inventor: PAN, Tingshan, Shenzhen Guangdong 518057 (CN)
(74) Representative: Studio Torta S.p.A.
(86) International application number: PCT/CN2016/074861
(87) International publication number: WO 2016/138845

(57) **Abstract**

A method and device realizing uploading of a protocol packet to a central processing unit (CPU). The method comprises: receiving and parsing a packet, and searching a virtual local area network (VLAN) table according to a VLAN identifier of the packet, the VLAN table comprising an identification indicating whether the VLAN identifier corresponds to a three-layer interface; if, according to the VLAN table, the VLAN identifier is determined to correspond to a three-layer interface, then determining whether to upload the packet to CPU on the basis of the identification indicating that the VLAN identifier correspond to a three-layer interface and the protocol type of the packet. The device comprises a receiving module and a forwarding module.

## Description

### TECHNICAL FIELD

The invention relates to but not limited to a technology of LAN (local area network) switching, especially relating to a method and a device realizing upload of protocol packet to central processing unit (CPU).

### BACKGROUND

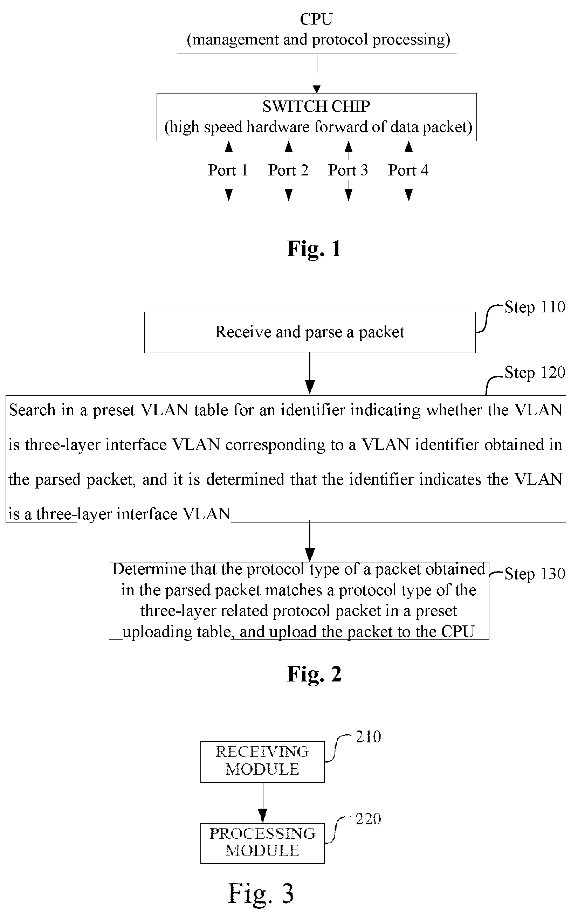

As shown in Fig.1, a switchboard normally includes a switching chip and a CPU connecting with the switching chip. The switchboard forwards data packet on the second and third layers of hardware with high speed. The interaction between the second and the third layer protocols in the switchboard is normally processed by the CPU inside the switchboard. The switchboard uploads protocol packets to CPU based on inner registers settings, inner table items settings or ACL (Access Control List) rule settings. Current switching chips have deficiencies in supporting uploading protocol packet. In actual practice, current switching chips cannot send all necessary protocol packets to CPU without inner registers uploading, inner table items uploading and ACL rules uploading. Thus, it can be seen that the process of protocol packet uploading performed by current switching chips are complicated and a lot of ACL resources are occupied. ACL is all embodied as TCAM (ternary content addressable memory), and TCAM resource is relatively high in cost. The ACL items supported by the switching chip are normally limited, while, ACL basically can flexibly support all the functions of the switching chip. If protocol uploading occupies too many ACL items, the performance indexes for many functions of the switching chip will be impaired.

Even if ACL resources are used, due to the limitation of ACL resources and the global trade-off, many protocol requests, such as, Address Resolution Protocol (ARP) request, and etc., tend to be uploaded unnecessarily or by wrong, which is a problem and may result in useful protocol packets are attacked and thus discarded, and at the same time, the CPU unnecessary processing burden will be increased.

### SUMMARY

As follows, the summary for the subject described in detail in the present invention is provided, which do not limit the protective scope of the claims in any way.

In the embodiments of the present invention, a method and a device for uploading protocol packets to CPU is provided for reducing process burden of the CPU.

In the embodiments of the present invention, it is provided with a method for uploading protocol packets to CPU, including the following steps.

A switch chip receives and parses the packets.

The switch chip searches in a preset virtual local area network (VLAN) table for an identifier indicating whether it is configured with a three-layer interface or not, corresponding to a VLAN identifier obtained in the parsed packet. In an embodiment, the VLAN table includes correspondences between VLAN identifiers and the identifiers indicating whether the VLAN is a three-layer interface VLAN or not.

The switching chip uploads the packet to the CPU, if the switching chip determines that the searched identifier indicates that the VLAN is a three-layer interface VLAN, and if the switching chip determines that the protocol type of the packet obtained by parsing the packet matches a protocol type of a three-layer related protocol packet in a preset uploading table. Alternatively, the method further includes:
If the switching chip determines that the searched identifier indicates that the VLAN is not a three-layer interface VLAN, then the packet is processed as a non-three-layer protocol packet.

Alternatively, the method further includes:
If the switching chip determines that the protocol type of the packet obtained by parsing the packet does not match any protocol type of any three-layer related protocol packet in a preset uploading table, then the packet is not uploaded to the CPU.

Alternatively, the protocol type of the three-layer protocol packet in the uploading table may include one or more types of: address resolution protocol (ARP), open shortest path first (OSPF) and dynamic host configuration protocol (DHCP).

In the embodiments of the present invention, it is further provided with a computer readable storage medium, on which computer executable instructions for executing any method as described above are stored.

In the embodiments of the present invention, it is further provided with a device for uploading protocol packets to CPU, including a receiving module and a processing module, wherein:
The receiving module is configured to receive and parse the packet.

The processing module is configured to search in a preset virtual local area network (VLAN) table for an identifier indicating whether the VLAN is a three-layer interface VLAN or not, corresponding to a VLAN identifier obtained in the parsed packet, wherein the VLAN table includes correspondences between VLAN identifiers and the identifiers indicating whether the VLAN is a three-layer interface VLAN or not.

The switching chip uploads the packet to the CPU, when the switching chip determines that the searched identifier indicates that the VLAN is a three-layer interface VLAN, and the switching chip determines that the protocol type of the packet obtained by parsing the packet matches a protocol type of a three-layer related protocol packet in a preset uploading table. Alternatively, the processing module may be further configured to:
Process the packet as a non-three-layer protocol packet, when it is determined that the searched identifier indicates that the VLAN is not a three-layer interface VLAN.

Alternatively, the processing module may be further configured to:
Do not upload the packet to the CPU, if it is determined that the protocol type of the packet obtained by parsing the packet does not match any protocol type of any three-layer related protocol packet in a preset uploading table.

Alternatively, the protocol type of the three-layer protocol packet in the uploading table including one or more selected from the following types: address resolution protocol (ARP), open shortest path first (OSPF) and dynamic host configuration protocol (DHCP).

Compared with the relative art, according to the embodiments of the present invention, the processing burden of CPU is reduced, accurate and convenient uploading of the protocol packet is achieved, and the problems of complex operation of uploading protocol packets with current switching chips, occupying too much ACL resource, as well as the troubles of attacking CPU due to unnecessary protocol packets upload are solved.

Other features and advantages of the embodiments in the invention will be described in the following description, meanwhile, part of these will become apparent from the description or be understood by implementing the invention. The objects and other advantages of the inventive embodiments can be realized or obtained by description, appended claims and structures specifically indicated in the figures.

Other aspects will be understood after reading and understanding the figures and detail description.

### BRIEF DESCRIPTION OF THE DRAWINGS

Fig.1 is a diagram of a switchboard system in the related technology.
Fig.2 is a flow chart according to a first embodiment of the present invention.
Fig.3 is a structural diagram of the device according to a second embodiment of the present invention.
Fig.4 is a flow chart of an application example for uploading protocol packets to CPU according to an embodiment of the present invention.

### DETAILED DESCRIPTION

The exemplary embodiments will now be described with more details hereinafter with reference to accompanying drawings, in which exemplary embodiments are shown. It should be noted, the embodiments in the present application and the features in the embodiments can be arbitrarily combined as demand.

The steps illustrated in the flow chart of the figures can be executed in the computer system as a group of computer executable instructions. Furthermore, although a particular logical sequence is shown in the flow chart, under some instances, those steps illustrated or described can be executed in a different sequence.

### First Embodiment

In the embodiment, a method for uploading protocol packets to CPU, as shown in Fig.2, is described. The method includes the following steps.

In Step 110, a switch chip receives and parses the packet.

In this step, the packet enters into the switch chip and undergoes a normal parsing process. A VLAN identifier (the outermost layer VLAN identifier) and a protocol type of the packet are parsed. Each kind of protocol packet corresponds to a global resister, for storing the packet of this kind of protocol type.

In this step, that how to parse the packet to obtain VLAN identifier with the switch chip can be realized with techniques commonly known by a person skilled in the art. This should not limit the scope of the invention, and details thereof are omitted here.

In Step 120, the switch chip searches in a preset virtual local area network (VLAN) table for an identifier indicating whether the VLAN is a three-layer interface VLAN or not, corresponding to a VLAN identifier obtained in the parsed packet. And when the switching chip determines that the searched identifier indicates that the VLAN is a three-layer interface VLAN, then the process proceeds to step 130.

An identifier which indicates whether the VLAN is a three-layer interface VLAN or not is preset in the VLAN table. For example, an identifier of 1 bit indicating whether the VLAN is configured with a three-layer interface or not. If the VLAN identifier indicates that the VLAN is configured with a three-layer interface, then the identifier is set as "1". If the VLAN identifier indicates that it is not configured with the three-layer interface, then the identifier is set as "0". The identifier indicating whether the VLAN is a three-layer interface VLAN or not is a global setting. If the VLAN identifier indicates that the VLAN is a three-layer interface VLAN, then the switch chip will mark the packet.

When the VLAN identifier is an identifier that indicates the VLAN is not a three-layer identifier VLAN, the switch chip processes the packet as a non-three-layer related protocol packet according to the entrance port number and the type of the protocol.

In this embodiment, the entrance port number represents the port number of the packet received by the switch chip.

In this embodiment, the switch chip processing the packet as a non-three-layer related protocol packet according to the entrance port number and the type of the protocol may include following operations.

The switch chip searches for the entrance port number in preset port numbers, and uploads the packet to the CPU based on the entrance port number when the protocol type of the packet obtained by parsing is determined to match a protocol type of a two-layer related protocol packet in a preset uploading table.

In an embodiment, if the switch chip cannot find the entrance port number in the preset port numbers, or the switch chip determines that the protocol type of the packet obtained by parsing does not match any packet type of the preset two-layer related protocol packet, the switch chip does not upload the packet to the CPU, but forward the packet according to its normal forward procedure.

If the protocol type of the two-layer related protocol packet includes the protocol type of the packet obtained by parsing, then the switch chip determines that the protocol type of the packet obtained by parsing matches the protocol type of the preset two-layer related protocol packet.

If the protocol type of the two-layer related protocol packet does not includes the protocol type of the packet obtained by parsing, then the switch chip determines that the protocol type of the packet obtained by parsing does not match the protocol type of the preset two-layer related protocol packet.

In this embodiment, the preset port number can be realized in many ways, for example, the port enable bitmap may be stored in the switch chip, each port corresponding to one enable bit (i.e. one bit), 1 representing uploading to CPU and 0 representing not uploading to CPU.

In Step 130, if the switch chip determines that the protocol type of a packet obtained by parsing matches a protocol type of the three-layer related protocol packet in a preset uploading table, then it uploads the packet to the CPU.

In this step, if the protocol type of the three-layer related protocol packet in the uploading table includes the protocol type of the packet obtained by parsing, then the switch chip determines that the protocol type of the packet obtained by parsing matches the protocol type of the three-layer related protocol in the preset uploading table.

If the protocol type of the three-layer related protocol packet in the uploading table does not comprise the protocol type of the packet obtained by parsing, then the switch chip determines that the protocol type of the packet obtained by parsing does not match the protocol type of the three-layer related protocol in the preset uploading table.

Alternatively, the method further includes:
If the switching chip determines that the protocol type of the packet obtained by parsing does not match the protocol type of the three-layer packet in the uploading table, then it does not upload the packet to the CPU.

The protocol types of the three-layer protocol packet in the uploading table may comprise one or more in the following types: address resolution protocol (ARP), open shortest path first (OSPF) and dynamic host configuration protocol (DHCP).

The three-layer related protocol packet in the present invention is not limited to a three-layer packet, that is to say, the Ethernet type may possibly is not 0x0800, such as, ARP packet.

The protocol packets of two-layer switchboards and of three-layer switchboards are distinguished from each other in this embodiment. Two-layer protocol packets are uploaded based on a physical port, while three-layer related protocol packets are uploaded based on whether the VLAN port can enable a three-layer interface to upload packets. That is, packets that are satisfied with the following two conditions can be uploaded to the CPU: the VALN identifier of the packet indicates that the VLAN is a three-layer interface VLAN, and the protocol type of the packet belongs to the protocol types of the preset three-layer related protocol packets. The process of uploading is globally controlled by the register, and is independent from the physical port and the VLAN port. Thus, the processing complexity is reduced and hardware resources are saved.

### Second Embodiment

In the present embodiment, a device for realizing the method according to the first embodiment, as shown in Fig.3, is described. The device including a receiving module 210 and a processing module 220.

The receiving module 210 is configured to receive and parse the packet.

The processing module 220 is configured to search in a preset virtual local area network (VLAN) table for an identifier indicating whether the VLAN is a three-layer interface VLAN or not, corresponding to a VLAN identifier obtained in the parsed packet, wherein the VLAN table includes correspondences between VLAN identifiers and the identifiers indicating whether the VLAN is a three-layer interface VLAN or not.

The switching chip uploads the packet to the CPU, when the switching chip determines that the searched identifier indicates that the VLAN is a three-layer interface VLAN, and the switching chip determines that the protocol type of the packet obtained by parsing the packet matches a protocol type of a three-layer related protocol packet in a preset uploading table. Alternatively, the processing module 220 is further configured to:
Process the packet as a non-three-layer protocol packet, if it is determined that the searched identifier indicates that it is not a three-layer interface VLAN.

Alternatively, the processing module 220 is further configured to:
Do not upload the packet to the CPU, if it is determined that the protocol type of the packet obtained by parsing the packet does not match any protocol type of any three-layer related protocol packet in a preset uploading table.

Alternatively, the protocol types of the three-layer protocol packets in the uploading table comprise one or more from the following types: ARP, OSPF and DHCP.

### Application examples

Now the exemplary method above will be specifically described with reference to the application examples. In the following example, an ARP packet is used as an example of a packet received, which is only an example for the convenience of explanation and other types of protocol packet can also be used in the method similarly.

As shown in Fig.1, in the switchboard, port 1 belongs to VLAN 1, and port 2 belongs to VLAN 2. A three-layer interface is configured for VLAN 2 and no three-layer interface is configured for VLAN 1. Since VLAN 2 is configured with the three-layer interface, the VLAN table of VLAN 2 is globally set and VLAN 2 is identified as the three-layer interface LAN. The packet whose protocol type is ARP is to be uploaded to CPU. It is not necessary to set VLAN 1. An uploading table is globally set for recording the protocol types of the three-layer related protocol packets. In this example, the protocol types in the uploading table comprise the ARP packet.

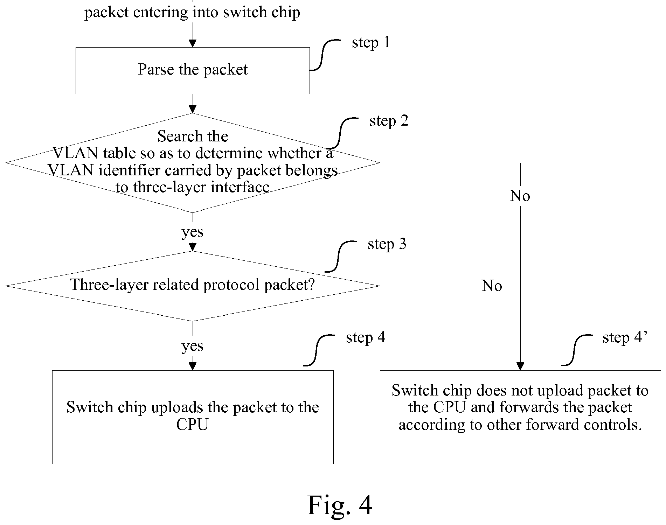

A large quantity of ARP request packets of VLAN 1 enter into the switchboard from port 1, preparing to attack the CPU. The ARP request packets of VLAN 2 entered from port 2 need to be processed by the CPU. The flow chart for uploading the packets to the CPU is as shown in Fig.4, and the respective description for processing the packets entered from port 1 and the packets entered from port 2.

The processing of ARP request packet from port 1 is as follows:
In Step 1, an ARP request packet enters into the switchboard form port 1, and the switch chip parses the packet as an ARP packet.

In Step 2, it is determined whether the VLAN identifier carried by the packet is a three-layer interface identifier or not by searching the VLAN table. Since the VLAN of the present packet is 1, after searching for an identifier indicating whether the VLAN is a three-layer interface VLAN or not that corresponds to VLAN 1 in the VLAN table, it is determined that VLAN 1 is not configured with a three-layer interface.

In Step 3, it is determined whether the protocol type of the packet belongs to the protocol types of the preset three-layer related protocol packets by searching the uploading table. Although ARP packet itself is a two-layer packet, it belongs to a three-layer related protocol packet, and thus its type matches the protocol type in the uploading table.

In an alternative embodiment, step 3 may be omitted.

In Step 4, since the VLAN of the packet does not belong to a three-layer interface VLAN, the ARP packet will not be uploaded to the CPU, and thus it cannot attack the CPU.

The packet that is not uploaded to the CPU is processed according to other forward rules of the switch chip (such as, according to the entrance port number and the protocol type).

The processing of ARP request packet from port 2 is as follows:
In Step 1, an ARP request packet enters into the switchboard form port 2, and the switch chip parses the packet as an ARP packet.

In Step 2, it is determined whether the VLAN identifier carried by the packet indicates that the VLAN is a three-layer interface VLAN or not by searching the VLAN table. Since the VLAN of the present packet is 2, after searching for an identifier that corresponds to VLAN 2 in the VLAN table, it is determined that VLAN 2 is configured with a three-layer interface.

In Step 3, it is determined whether the protocol type of the packet belongs to the protocol types of the preset three-layer related protocol packets by searching the uploading table. Although ARP packet itself belongs to a two-layer packet, it belongs to a three-layer related protocol packet, and thus its type matches the protocol type in the uploading table.

In Step 4, the switch chip uploads ARP packet to the CPU by a normal ARP packet upload process, based on the fact that the VLAN of the packet belongs to a three-layer interface VLAN and the protocol type of the packet matches the protocol type in the uploading table.

In the embodiments of the present invention, it is further provided with a computer readable storage medium, on which computer executable instructions for executing any method as described above are stored.

For a person skilled in the art, it should be understood that the whole or parts of steps related with the methods above can be completed by related hardware (such as, a processor), which is instructed by programs stored on the computer readable storage medium, such as, ROM, magnetic disc or compact disc, etc. Optionally, the whole or parts of steps related the embodiments above can be performed by one or more integrated circuits. Correspondingly, each module/unit in the embodiments above can be embodied as hardware, such as, realizing corresponding functions through integrated circuits, and also be embodied as software functional modules, such as realizing corresponding functions with the programs/instructions stored in the memory and executed by the processor. The invention is not limited to any particular forms of combination of hardware and software.

Although the preferred embodiments are shown as above, they are only exemplary implementations provided for facilitating understanding the present invention. Numerous variations and alternatives can be made without departing the spirit and scope disclosed by the invention by a person skilled in the art. However, the scope of the invention is definitely defined by the accompanying claims.

### Industrially Applicability

With the embodiments of the present invention, the processing burden of CPU is reduced, accurate and convenient uploading of the protocol packet can be achieved, and the problems of complex operation of uploading protocol packets with current switching chips, occupying too much ACL resource, as well as the troubles of attacking CPU due to unnecessary protocol packets upload are solved.

## Claims

1. A method for uploading protocol packets to CPU, comprising:
receiving a packet by a switch chip, and parsing the packet to obtain a preset virtual local area network (VLAN) identifier;
searching in a VLAN table for an identifier indicating whether the VLAN is a three-layer interface VLAN or not, corresponding to the VLAN identifier obtained in the parsed packet, by the switch chip, wherein the VLAN table includes correspondences between VLAN identifiers and the identifier indicating whether the VLAN is a three-layer interface VLAN or not;
uploading the packet to the CPU by the switching chip, when the searched identifier indicates that the VLAN is a three-layer interface VLAN, and the protocol type of the packet obtained in the parsed packet is determined to match a protocol type of a three-layer related protocol packet in a preset uploading table.

2. The method according to claim 1, further comprising:
processing the packet as a non-three-layer protocol packet by the switching chip, if it is determined that the searched identifier indicates that the VLAN is not a three-layer interface VLAN.

3. The method according to claim 1, further comprising:
not uploading the packet to the CPU by the switching chip, if it is determined that the protocol type of the packet obtained in the parsed packet does not match any protocol type of any three-layer related protocol packet in a preset uploading table.

4. The method according to any one of claims 1-3, wherein protocol types of the three-layer related protocol packets in the uploading table include one or more types selected from: address resolution protocol (ARP), open shortest path first (OSPF) and dynamic host configuration protocol (DHCP).

5. A device for uploading protocol packets to CPU, comprising a receiving module and a processing module, wherein:
the receiving module, configured to receive a packet and parse the packet to obtain a preset virtual local area network (VLAN) identifier;
the processing module, configured to search VLAN table for an identifier indicating whether the VLAN is a three-layer interface VLAN or not, corresponding to the VLAN identifier obtained in the parsed packet, wherein the VLAN table includes correspondences between VLAN identifiers and the identifiers indicating whether the VLAN is a three-layer interface VLAN or not;
the processing module uploads the packet to the CPU, when the switching chip determines that the searched identifier indicates that the VLAN is a three-layer interface VLAN, and the protocol type of the packet obtained in the parsed packet is determined to match a protocol type of a three-layer related protocol packet in a preset uploading table.

6. The device according to claim 5, the processing module is further configured to:
process the packet as a non-three-layer protocol packet, if it is determined that the searched identifier indicates that the VLAN is not a three-layer interface VLAN.

7. The device according to claim 5, the processing module is further configured to:
do not upload the packet to the CPU, if it is determined that the protocol type of the packet obtained in the parsed packet does not match any protocol type of any three-layer related protocol packet in a preset uploading table.

8. The device according to any one of claims 5-7, wherein protocol types of the three-layer related protocol packets in the uploading table include one or more types selected from: address resolution protocol (ARP), open shortest path first (OSPF) and dynamic host configuration protocol (DHCP).

9. A computer readable storage medium, on which computer executable instructions for executing the method according to any one of claims 1-4 are stored.
